# FASCICULE DE BREVET EUROPEEN

(11) **EP 0 967 835 B1**
(45) Date de publication et mention de la délivrance du brevet: **24.08.2005**
(21) Numéro de dépôt: 99401558.4
(22) Date de dépôt: 23.06.1999
(51) Int. Cl.: H05B 3/14, C04B 41/87, C04B 35/628, C04B 35/195

(54) **Procédé pour améliorer les performances radiatives d'un émetteur de rayonnement infrarouge et procédé de fabrication d'un tel émetteur**
Verfahren zur Verbesserung der Strahlungsleistung eines Infrarotstrahlers und Verfahren zur Herstellung eines solchen Infrarotstrahlers
Method for improving the radiative performance of an infrared emitter and method of manufacturing the same

(30) Priorité: 24.06.1998 FR 9808010
(43) Date de publication de la demande: 29.12.1999
(73) Titulaire: Itech System, 41150 Onzain (FR)
(72) Inventeur: Chabin, Michel, 45160 Olivet (FR); Duneau, Gérard, 41120 Cande sur Beuvron (FR); De Sousa Meneses, Domingos, 77570 Chateau Landon (FR); Echegut, Patrick, 45130 Baule (FR); Malki, Mohammed, 45100 Orleans (FR); Odier, Philippe, 38640 Claix (FR); Rousseau, Benoît, 49460 Ecuille (FR)
(74) Mandataire: Kedinger, Jean-Paul

(56) Documents cités:
- FR-A- 2 641 930
- US-A- 3 610 888
- DATABASE WPI Section Ch, Week 8219 Derwent Publications Ltd., London, GB; Class A85, AN 82-38101E XP002095905 & JP 57 055085 A (NGK SPARK PLUG CO LTD), 1 avril 1982 (1982-04-01)
- DATABASE WPI Section Ch, Week 8820 Derwent Publications Ltd., London, GB; Class L03, AN 88-136587 XP002095906 & JP 63 078476 A (OKURA TECHNO RES KK), 8 avril 1988 (1988-04-08)
- DATABASE INSPEC [Online] INSTITUTE OF ELECTRICAL ENGINEERS, STEVENAGE, GB LALEVIC B ET AL: "Switching processes and dielectric breakdown in NiO and NiO(Li) thin films" Database accession no. 659935 XP002113521 & PHYSICA STATUS SOLIDI A, 16 MAY 1974, EAST GERMANY, vol. 23, no. 1, pages 61-67, ISSN: 0031-8965

## Description

La présente invention a pour objet un procédé pour améliorer les performances radiatives d'un émetteur de rayonnement thermique infrarouge ; elle a également pour objet un procédé de fabrication d'un tel émetteur.

Dans sa conception la plus simple, un émetteur de ce type comprend un substrat réfractaire dans lequel est noyée une résistance électrique. Lorsque cette résistance est chauffée par effet Joule elle échauffe le substrat qui émet alors un rayonnement infrarouge et peut de ce fait servir d'élément chauffant dans des domaines d'application les plus divers, notamment pour le séchage par exemple de peintures.

L'émission de ce rayonnement à partir de la surface de l'émetteur dépend de plusieurs facteurs, parmi lesquels la température de la résistance électrique et un facteur prenant une valeur située dans la plage de 0 à 1, appelé émissivité et qui dépend lui-même de nombreux paramètres tels que la longueur d'onde du rayonnement et la nature du matériau constituant le substrat réfractaire.

Ainsi, les performances radiatives d'un émetteur, mesurées par la puissance rayonnée par l'émetteur à une température de fonctionnement donnée, dépendent donc des caractéristiques d'émission (ou émissivité) de la surface émettrice ; plus l'émissivité est élevée, meilleures sont les performances radiatives.

Ces performances radiatives restent souvent insuffisantes dans la pratique, de sorte que pour atteindre une puissance rayonnée suffisante, afin d'obtenir par exemple un effet de séchage suffisant, il est nécessaire d'augmenter la température de l'émetteur. Ceci présente deux inconvénients, à savoir une consommation accrue d'énergie électrique ce qui est économiquement peu satisfaisant, et une possible détérioration accélérée de l'émetteur.

Le but de la présente invention est donc en premier lieu d'améliorer les performances radiatives en cause.

Le document JP-A-57 055085 décrit un émetteur de rayonnement thermique à base d'un matériau céramique dans lequel est noyée une résistance, cet émetteur comprenant de l'oxyde de nickel NiO.

Le document FR-A-2 641 930 décrit un dispositif de chauffage électrique à haute température, comprenant un substrat en céramique, un élément résistif et une couche d'une poudre projetée à l'état liquide. Cette couche peut être constituée par un oxyde de nickel, de titane ou de chrome, ou encore par un mélange d'un de ces oxydes avec de l'alumine.

Ainsi, un premier objet de la présente invention est de proposer un procédé pour améliorer les performances radiatives d'un émetteur de rayonnement thermique (IR), à base d'un matériau réfractaire, ce procédé étant caractérisé en ce qu'il comprend l'opération consistant à combiner avec ledit matériau réfractaire, une substance présentant sur le domaine spectral s'étendant de 0,5 à 30 µm et notamment de 0,5 à 10 µm, une émissivité normale spectrale supérieure à celle dudit matériau réfractaire et notamment une émissivité normale spectrale la plus proche possible de l'unité, notamment ≥ 0,9.

Il est à noter que par « émissivité normale spectrale » d'un matériau, on entend. l'émissivité spectrale lorsque celle-ci est mesurée dans une direction perpendiculaire à la surface d'une couche de ce matériau.

L'idée à la base de ce procédé est donc de modifier l'émetteur à base d'un matériau réfractaire afin d'augmenter ses propriétés émissives et notamment pour que celles-ci se rapprochent de celles du corps noir dont, par définition, l'émissivité est égale à 1 et constitue par conséquent un émetteur parfait. Cette augmentation de l'émissivité aura pour conséquence une augmentation des performances radiatives de l'émetteur et ce, sans accroissement de la température de fonctionnement avec tous les avantages que cela comporte, notamment économie d'énergie et augmentation de la longévité de l'émetteur.

L'émetteur modifié selon l'invention aura donc à une température T une émissivité ε(T) égale au rapport de sa luminance L (à la température T) à la luminance du corps noir (à cette même température T), cette dernière luminance étant parfaitement définie par la loi de Planck. On sait par ailleurs que la fréquence (longueur d'onde) du rayonnement émis, pour laquelle la luminance est maximale (D max), dépend de la température de l'émetteur selon la loi de Wien (D max = C/T où C = constante et T = température en K).

On comprendra alors que lorsque l'émissivité de l'émetteur réalisé selon l'invention aura une valeur proche de l'unité, il sera possible d'ajuster le maximum d'émission de l'émetteur sur une bande de fréquence (longueur d'onde) choisie, simplement en imposant une température appropriée à l'émetteur.

Ceci présente un intérêt tout à fait significatif puisqu'il y a ainsi possibilité d'adapter les propriétés émissives de l'émetteur en fonction de l'application visée. Ainsi, si l'on cherche par exemple à sécher un corps humide, on choisira la température de l'émetteur pour que ce dernier développe une émission IR dans une bande de longueur d'onde d'absorption de l'eau (au voisinage de 3 µm). Par ailleurs, si on vise à sécher des peintures, on cherchera à adapter les caractéristiques spectrales (et donc la température) de l'émetteur de façon à sécher d'abord les couches profondes pour permettre l'évacuation des vapeurs de solvant de la peinture à travers la couche supérieure non séchée.

On ajoutera que l'opération de combinaison selon l'invention (du matériau réfractaire à la substance présentant une émissivité normale spectrale supérieure à celle de ce matériau) peut comprendre le mélange de ce matériau avec cette substance ; on préfère toutefois que cette combinaison comprenne le dépôt en revêtement de ladite substance sur partie au moins de la surface extérieure de l'émetteur.

Il est à noter que le procédé ci-dessus selon l'invention est applicable notamment pour un émetteur dont le matériau réfractaire est constitué par une céramique, par exemple un mélange de cordiérite et de mullite.

La présente invention a par ailleurs pour objet un procédé de fabrication d'un émetteur de rayonnement thermique (IR) présentant des performances radiatives élevées, ce procédé comprenant le pressage puis le frittage d'une masse de poudre réfractaire frittable au sein de laquelle est noyée une résistance électrique, pour obtenir une masse frittée, caractérisé en ce qu'il comprend en outre la formation sur une partie au moins de la surface de la dite masse frittée, d'un revêtement comprenant une substance douée d'une émissivité normale spectrale supérieure à celle de la masse frittée.

Ladite substance est de préférence douée d'une émissivité normale spectrale la plus proche possible de l'unité, avantageusement sur la plus large plage possible de longueurs d'ondes.

Selon un premier mode de réalisation de ce procédé de fabrication, la formation dudit revêtement est effectuée avant le pressage et le frittage, par exemple en déposant une couche de ladite substance (notamment sous forme pulvérulente) sur une partie au moins de la surface de la masse de poudre réfractaire puis en soumettant au pressage et au frittage la double couche ainsi formée.

Selon un second mode de réalisation du procédé de fabrication selon l'invention, la formation dudit revêtement est effectuée après le pressage et le frittage. Ainsi, après le pressage et le frittage de la masse de poudre réfractaire, on applique sur la masse frittée résultante, ladite substance douée d'une émissivité normale spectrale supérieure à celle de ladite masse frittée, cette application pouvant par exemple être réalisée par pulvérisation.

A titre d'exemple, cette application comprend la réalisation d'une suspension (par exemple aqueuse) de ladite substance dans un milieu de mise en suspension (par exemple de l'eau), puis le dépôt de celle-ci (par exemple par pulvérisation) sur la masse frittée, ce dépôt étant suivi d'une cuisson à une température au moins suffisante pour éliminer ledit milieu.

La concentration en ladite substance de cette suspension sera choisie en fonction du mode d'application de cette dernière ; ainsi, si cette application est par exemple réalisée au pistolet, cette concentration sera avantageusement de 10 à 20% en poids.

On notera qu'il est possible d'incorporer dans cette suspension aqueuse un additif d'accrochage de ladite substance à la surface de la masse frittée.

A titre d'additif d'accrochage, utilisation peut être faite de toute substance conférant au revêtement selon l'invention une tenue mécanique suffisante. On peut ainsi citer un mélange de silice colloïdale et d'un granulat calciné comprenant de la cordiérite (de préférence au moins 80% en poids) et de la mullite (de préférence 7 à 8% en poids) ; un tel granulat est disponible dans le commerce, par exemple sous la marque de fabrique ARTAL 23, auprès de la société française ARGILES ET MINERAUX A.G.S. Dans ce cas, la cuisson devra être effectuée à une température suffisante pour réaliser la fusion de la silice et ainsi obtenir un revêtement vitrifié dont l'accrochage à la surface de l'émetteur est excellent.

On précisera encore que l'épaisseur du revêtement formé sur la masse frittée sera de préférence au moins égale à 50 µm, la limite supérieure pour cette épaisseur étant déterminée par des considérations d'ordre physique économique

La poudre réfractaire susmentionnée mise en oeuvre dans le procédé de fabrication selon l'invention peut notamment être constituée par une poudre céramique tel qu'un mélange de cordiérite et de mullite.

Par ailleurs, la substance mise en oeuvre dans les procédés selon l'invention et ayant les propriétés d'émissivité souhaitées sera avantageusement choisie parmi les oxydes noirs et préférentiellement ceux de type pérovskite et notamment parmi les oxydes noirs polaroniques.

Au sujet de ces derniers, on rappellera qu'ils présentent un mécanisme microscopique d'absorption situé dans l'infrarouge que l'on désigne par le terme de "polaron". Ce mécanisme, issu de l'interaction d'un électron avec le réseau cristallin, a la particularité d'introduire une valeur de coefficient d'absorption significative sur l'ensemble de la gamme spectrale correspondant au rayonnement thermique. Cette caractéristique fait que ces matériaux sont opaques sur cette gamme spectrale pour des épaisseurs appropriées et leurs confère des propriétés radiatives proches d'un comportement de type corps noir. A titre d'oxydes noirs polaroniques, on citera par exemple :
- les oxydes mixtes de formule générale Lₙ₊₁ Mₙ O₃ₙ₊₁ ou Lₙ₊₁ Mₙ O₂ₙ₊₂ dans laquelle L est un élément de la série des terres rares, M est l'élément de transition Ni, Co ou Mn et n ≥ 1, et,
- les oxydes de cuivre de couleur noire.

Les oxydes noirs polaroniques susmentionnés optimisent les propriétés radiatives de l'émetteur préparé selon l'invention, avec de fortes émissivités spectrales sur de larges domaines spectrales (0,5-30 µm) et sur une gamme étendue de températures (300-2000K), selon la nature chimique de l'oxyde.

On trouvera des informations utiles sur certains des oxydes de cuivre sus-visés dans :
Crystal Structures of high Tc supraconducting copper oxides ; publié par Physica C. et édité par Science Technology Center for supraconductivity, National Science Foundation, Materials Science Division, Argonne National Laboratory, Argonne Illinois 60439 (juillet, 1994).
Par ailleurs, les oxydes de formule Lₙ₊₁ Mₙ O₃ₙ₊₁, appelés composés de la série dite de Ruddlesden-Popper, sont décrits dans la littérature et on pourra se reporter à "B.C.H. Steel Material Research Bulletin 17, 621 (1982)", "Journal of American Ceramic Society 79, 411 (1957)", "Acta Chem. Scand. 30, 389 (1976)", "Chem. Comm. 6, 767 (1996)".

Quant aux oxydes de formule Lₙ₊₁ Mₙ O₂ₙ₊₂, ils sont décrits dans "L'actualité chimique 2, 16 (mars 1995)".

Parmi les oxydes polaroniques, préférence est donnée à l'oxyde de formule Pr₂NiO₄. Des oxydes mixtes de ce type sont décrits dans "J. Solid State Chemistry 131, 167-172 (1997) et 56, 32 (1985)" et "Journal of American Ceramic Society 79, 411 (1957)". Par ailleurs, un mode opératoire général de synthèse sera illustré ci-après pour Pr₂NiO₄.

La présente invention s'étend à un émetteur de rayonnement thermique comprenant un substrat en matière réfractaire dans lequel est incorporée une résistance électrique, caractérisé en ce que ledit substrat est pourvu sur une partie au moins de sa surface d'un revêtement comprenant une substance douée d'une émissivité normale spectrale supérieure à celle dudit substrat, ladite substance étant telle que définie ci-dessus.

L'émetteur selon la présente invention comprend deux zones au niveau desquelles les deux extrémités de la résistance électrique émergent du bord externe du substrat. Or, en règle générale, la température de l'émetteur décroît fortement au voisinage de ces zones d'émergence par rapport aux autres points de l'émetteur ; il s'ensuit un profil thermique non uniforme de l'émetteur et, partant, des propriétés émissives non uniformes en tous points de l'émetteur.

Pour remédier à cet inconvénient, il est proposé selon l'invention de former ledit revêtement sur toute la surface du substrat, à l'exception desdites zones d'émergence. En effet, ces zones laissant à nu la masse frittée, sont moins émettrices que les autres parties de l'émetteur et de ce fait contribuent moins aux pertes radiatives ; la température de ces zones peut alors atteindre une température voisine de celle des autres parties de l'émetteur.

La présente invention sera maintenant décrite plus en détails par les exemples ci-après donnés à titre illustratif mais non limitatif.

### Exemple 1 : synthèse du Pr₂NiO₄

On mélange par co-broyage à sec 340,5 g de Pr₆O₁₁ et 74,7 g de NiO. Le mélange obtenu est alors introduit dans une nacelle en un matériau inerte, par exemple en Al₂O₃ , puis cuit à l'air dans un four pendant 24h, par exemple à 1100°C. Le produit est retiré du four, re-broyé et cuit à une température supérieure à 1100°C. On répète ces opérations et après quelques cycles atteignant par exemple 1250°C, le produit Pr₂NiO₄ est obtenu (environ 404,5 g) bien cristallisé dont la structure peut être testée par diffraction des rayons X. On notera que pour oxyder complètement le produit, il peut être intéressant de contrôler l'atmosphère de refroidissement, cette atmosphère pouvant notamment être l'air dans le cas de Pr₂NiO₄. Les températures de cuisson dépendant notamment de la réactivité des précurseurs et de leur granulométrie. Cette méthode de synthèse, dite « par réaction à l'état solide » est bien connue de l'homme de l'art et s'applique à tous les oxydes mixtes selon l'invention.

### Exemple 2 : fabrication d'un émetteur de rayonnement thermique.

En vue de cette fabrication, utilisation peut être faite du procédé enseigné dans le brevet français n° 93 12356 au nom de ITECH SYSTEM.

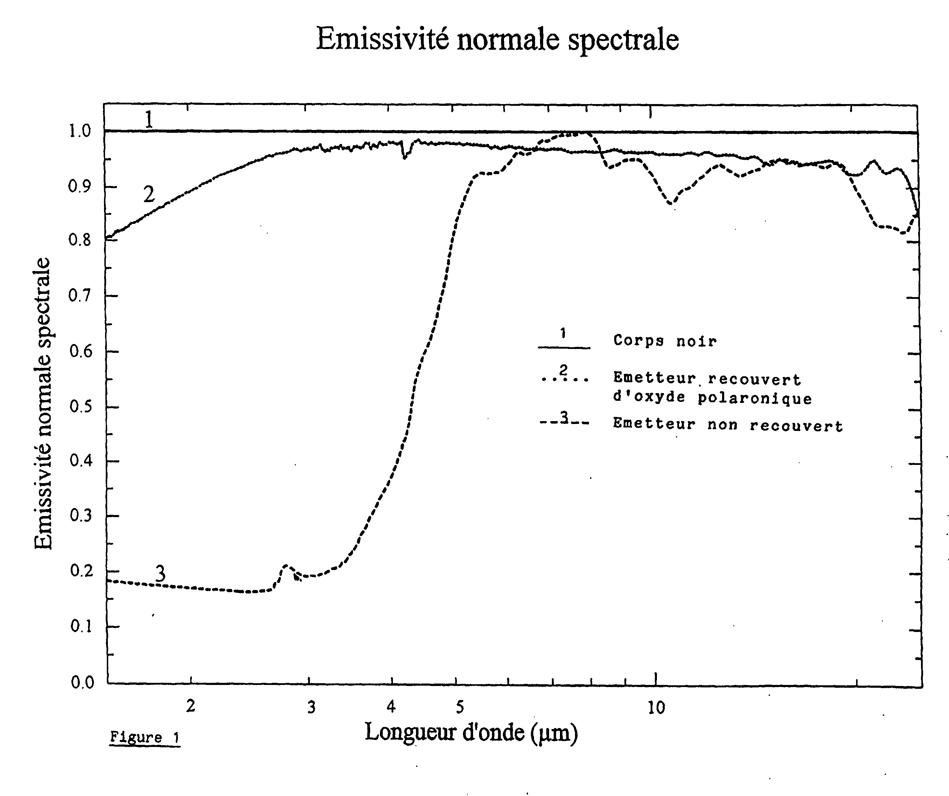

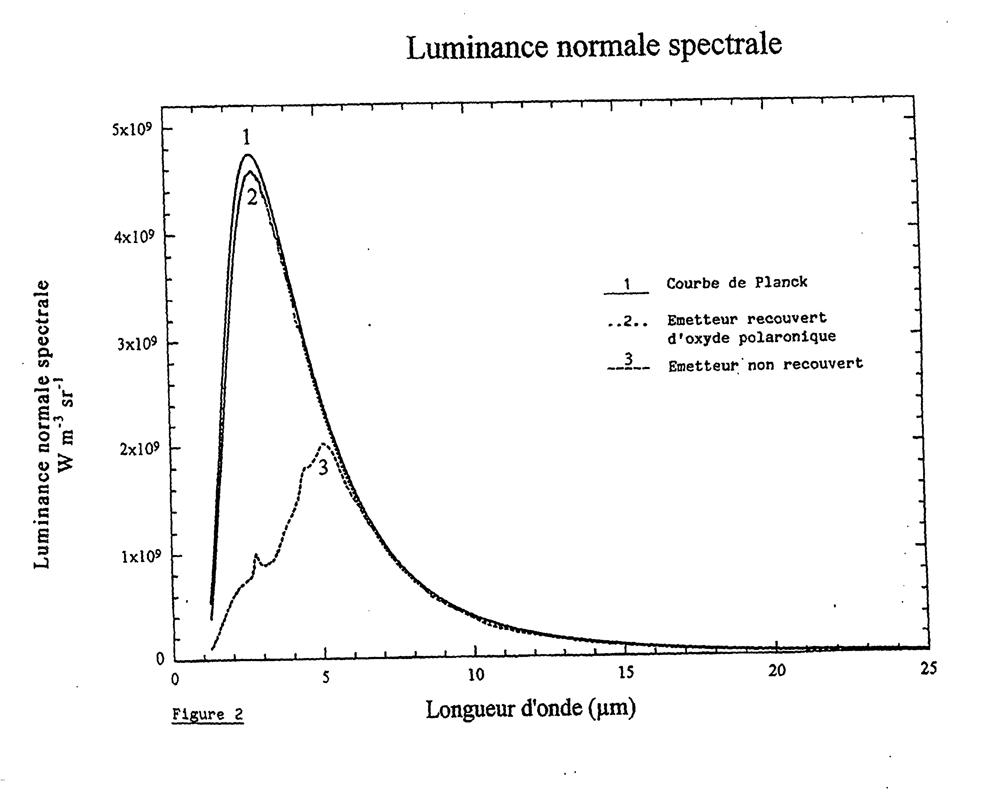

L'émissivité normale spectrale d'un émetteur conventionnel en matière céramique (mélange cordiérite/mullite à au moins 70% en poids de cordiérite) est relativement modeste puisqu'elle est inférieure à 0,2 (à 1030K) dans le domaine de longueur d'onde de 0,5-3 µm. Ceci est clairement illustré par les figures 1 et 2 annexées. La figure 1 est la représentation graphique de la relation existant à 1030K entre l'émissivité normale spectrale (ordonnées) et la longueur d'onde (en µm) (abscisses) du rayonnement d'un émetteur, et la figure 2 est la représentation graphique de la relation correspondante existant à 1030K entre la luminance normale spectrale (en W.m³.sr⁻¹) donnée en ordonnées et la longueur d'onde (en µm) donnée en abscisses du rayonnement de l'émetteur ; sur ces figures, les courbes 1 correspondent aux relations sus-visées pour un corps noir, les courbes 2 aux relations sus-visées pour un émetteur selon l'invention (pourvu d'un revêtement en oxyde noir polaronique) et les courbes 3 aux relations sus-visées pour un émetteur conventionnel (sans revêtement).

Pour exploiter le faible pouvoir émissif susmentionné dans le domaine de longueur d'onde considéré, il est par conséquent nécessaire d'utiliser une puissance électrique importante, ce qui a pour conséquence un faible rendement thermique global.

### Exemple 3 : dépôt d'un revêtement doué de propriétés émissives accrues sur la surface d'un émetteur conventionnel.

On prépare une suspension aqueuse en mélangeant 7 g de Pr₂NiO₄, 3 g d'Artal 23 et 10 g de silice coloïdale. La suspension résultante est ensuite appliquée en revêtement par pulvérisation au pistolet sur la surface de l'émetteur préparé conformément à l'Exemple 2 et on fait suivre par une cuisson à 1250°C, la quantité de suspension appliquée étant choisie pour qu'après cuisson, le revêtement subsistant ait une épaisseur d'environ 50µm. Il en résulte un dépôt vitrifié adhérant vert olive clair dont l'émissivité normale spectrale atteint une valeur de l'ordre de 0,8-0,9 entre 1 et 3 µm à une température de 965K.

### Exemple 4 : dépôt d'un revêtement doué de propriétés émissives accrues sur la surface d'un émetteur conventionnel.

On prépare une suspension aqueuse en mélangeant 8 g de Pr₂NiO₄, 10 g de DECOFLUX WB107 (marque de fabrique d'un complexe inerte vis à vis de Pr₂NiO_{4,} décomposable thermiquement et à base de produits d'addition d'oxyde de propylène et de polymères synthétiques) et 2 g d'eau. Ce complexe est utilisé pour réaliser une suspension sensiblement homogène du Pr₂NiO₄ dans l'eau. La suspension aqueuse ainsi obtenue est ensuite appliquée au pistolet sur la surface nue de l'émetteur de l'exemple 2 et on fait suivre par une cuisson à 1250°C pour éliminer l'eau et le complexe. Il subsiste à la surface de l'émetteur un dépôt noir (épaisseur ≈ 50 µm) qui présente des caractéristiques étonnantes. Ceci est mis en évidence par les courbes 2 des figure 1 et 2 qui montrent que l'émissivité normale spectrale de l'émetteur obtenu peut atteindre des valeurs aussi élevées que 0,8 à 0,95 jusqu'à 3 µm et de plus de 0,95 dans le domaine spectrale de 3 à 10 µm. L'étude à diverses températures montre que ce qui a été observé ci-dessus reste vrai dans une large plage de température (300-1000K).

## Revendications

1. Procédé pour améliorer les performances radiatives d'un émetteur de rayonnement thermique (IR), à base d'un matériau réfractaire dans lequel est noyée une résistance électrique, **caractérisé en ce qu'**il comprend l'opération consistant à combiner avec ledit matériau réfractaire, une substance présentant sur le domaine spectral s'étendant de 0,5 à 30 µm, une émissivité normale spectrale supérieure à celle dudit matériau réfractaire et la plus proche possible de l'unité, ladite substance étant choisie parmi les oxydes noirs polaroniques.

2. Procédé selon la revendication 1, **caractérisé en ce que** les oxydes noirs polaroniques sont choisis dans le groupe constitué par les oxydes mixtes de formule générale Lₙ₊₁ Mn O₃ₙ₊₁ ou Lₙ₊₁ Mn O₂ₙ₊₂ dans laquelle L est un élément de la série des terres rares, M est l'élément de transition Ni, Co ou Mn et n ≥ 1.

3. Procédé selon la revendication 1 ou 2, **caractérisé en ce que** l'oxyde noir polaronique est le Pr₂NiO₄.

4. Procédé selon la revendication 1, 2 ou 3, **caractérisé en ce que** l'opération consistant à combiner ledit matériau réfractaire à l'oxyde noir polaronique comprend le mélange de ce matériau et de cet oxyde.

5. Procédé selon la revendication 1, 2 ou 3, **caractérisé en ce que** l'opération consistant à combiner ledit matériau réfractaire à l'oxyde noir polaronique comprend le dépôt en revêtement dudit oxyde sur une partie au moins de la surface extérieure de l'émetteur.

6. Utilisation du procédé selon la revendication 5 pour la fabrication d'un émetteur de rayonnement thermique (IR) présentant des performances radiatives élevées, laquelle fabrication comprend le pressage puis le frittage d'une masse de poudre réfractaire frittable au sein de laquelle est noyée une résistance électrique, pour obtenir une masse frittée et la formation sur une partie au moins de la surface de la dite masse frittée, d'un revêtement comprenant une substance présentant sur le domaine spectral s'étendant de 0,5 à 30 µm, une émissivité normale spectrale supérieure à celle de la masse frittée et la plus proche possible de l'unité, ladite substance étant choisie parmi les oxydes noirs polaroniques.

7. Utilisation selon la revendication 6, **caractérisée en ce que** les oxydes noirs polaroniques sont choisis dans le groupe constitué par les oxydes mixtes de formule générale Lₙ₊₁ Mₙ O₃ₙ₊₁ ou Lₙ₊₁ Mₙ O₂ₙ₊₂ dans laquelle L est un élément de la série des terres rares, M est l'élément de transition Ni, Co ou Mn et n ≥ 1.

8. Utilisation selon la revendication 6 ou 7, **caractérisée en ce que** l'oxyde noir polaronique est le Pr₂NiO₄

9. Utilisation selon la revendication 6, 7 ou 8, **caractérisée en ce que** la formation dudit revêtement est effectuée avant le pressage et le frittage, en déposant une couche dudit oxyde noir polaronique sous forme pulvérulente sur une partie au moins de la surface de la masse de poudre réfractaire puis en soumettant au pressage et au frittage la double couche ainsi formée.

10. Utilisation selon la revendication 6, 7 ou 8, **caractérisée en ce que** la formation dudit revêtement est effectuée après le pressage et le frittage, par application sur la masse frittée dudit oxyde noir polaronique.

11. Utilisation selon la revendication 10, **caractérisée en ce que** ladite application comprend la réalisation d'une suspension dudit oxyde noir polaronique dans un milieu de mise en suspension, le dépôt de celle-ci sur la masse frittée et une cuisson à température au moins suffisante pour éliminer ledit milieu de mise en suspension.

12. Utilisation selon la revendication 10 ou 11, **caractérisée en ce que** ladite application ou ledit dépôt est réalisé par pulvérisation.

13. Utilisation selon la revendication 11 ou 12, **caractérisée en ce que** la suspension contient en outre un additif d'accrochage dudit oxyde noir polaronique à la surface de la masse frittée.

14. Emetteur de rayonnement thermique comprenant un substrat en matière réfractaire dans lequel est incorporée une résistance électrique, **caractérisé en ce que** ledit substrat est pourvu sur une partie au moins de sa surface d'un revêtement comprenant une substance présentant sur le domaine spectral s'étendant de 0,5 à 30 µm, une émissivité normale spectrale supérieure à celle dudit substrat et la plus proche possible de l'unité, ladite substance étant choisie parmi les oxydes noirs polaroniques.

15. Emetteur selon la revendication 14, **caractérisé en ce que** lesdits oxydes noirs polaroniques sont tels que définis à l'une quelconque des revendications 2 et 3.

16. Emetteur selon la revendication 14 ou 15, dans lequel les extrémités de la résistance électrique émergent au niveau de deux zones du bord externe du substrat, **caractérisé en ce que** ledit revêtement est prévu sur toute la surface dudit substrat, à l'exception desdites zones.

## Patentansprüche

1. Verfahren zur Verbesserung der Strahlungsleistungen eines Wärmestrahlers (Infrarot, IR), auf der Grundlage von feuerfestem Material, in welchem ein elektrischer Widerstand eingebettet ist, **dadurch gekennzeichnet, dass** es den Vorgang umfasst, der daraus besteht, eine Substanz mit dem feuerfesten Material zu kombinieren, welche in dem Spektralbereich, der von 0,5 bis 30 µm reicht, ein normales spektrales Emissionsvermögen aufweist, das höher als dasjenige des feuerfesten Materials ist und der Einheit am nächsten liegt, wobei die Substanz aus den polaronischen Schwarzoxiden ausgewählt wird.

2. Verfahren nach Anspruch 1, **dadurch gekennzeichnet, dass** die polaronischen Schwarzoxide aus der Gruppe ausgewählt werden, die aus gemischten Oxiden mit der allgemeinen Formel Lₙ₊₁ Mₙ O₃ₙ₊₁ oder Lₙ₊₁ Mₙ O₂ₙ₊₂ besteht, wobei L aus einem Element aus der Gruppe der Seltenerden, M aus dem Übergangselement Ni, Co oder Mn besteht und n ≥ 1 ist.

3. Verfahren nach Anspruch 1 oder 2, **dadurch gekennzeichnet, dass** das polaronische Schwarzoxid aus Pr₂NiO₄ besteht.

4. Verfahren nach Anspruch 1, 2 oder 3, **dadurch gekennzeichnet, dass** der Vorgang, der daraus besteht, das feuerfeste Material mit dem polaronischen Schwarzoxid zu kombinieren, die Mischung dieses Materials und dieses Oxids umfasst.

5. Verfahren nach Anspruch 1, 2 oder 3, **dadurch gekennzeichnet, dass** der Vorgang, der daraus besteht, das feuerfeste Material mit dem polaronischen Schwarzoxid zu kombinieren, die Ablagerung des Oxids als Beschichtung auf mindestens einem Bereich der äußeren Oberfläche des Strahlers umfasst.

6. Anwendung des Verfahrens nach Anspruch 5 für die Herstellung eines Wärmestrahlers (IR), welcher erhöhte Strahlungsleistungen aufweist, wobei die Herstellung das Pressen, anschließend die Versinterung einer sinterbaren feuerfesten Pulvermasse umfasst, innerhalb welcher ein elektrischer Widerstand eingebettet ist, um eine gesinterte Masse zu erhalten, und die Ausbildung, auf mindestens einem Bereich der Oberfläche der gesinterten Masse, einer Beschichtung, welche eine Substanz aufweist, die in dem Spektralbereich, der von 0,5 bis 30 µm reicht, ein normales spektrales Emissionsvermögen aufweist, das höher als dasjenige der gesinterten Masse ist und der Einheit am nächsten liegt, wobei die Substanz aus den polaronischen Schwarzoxiden ausgewählt wird.

7. Anwendung nach Anspruch 6, **dadurch gekennzeichnet, dass** die polaronischen Schwarzoxide aus der Gruppe ausgewählt werden, die aus gemischten Oxiden mit der allgemeinen Formel Lₙ₊₁ Mₙ O₃ₙ₊₁ oder Lₙ₊₁ Mₙ O₂ₙ₊₂ besteht, wobei L aus einem Element aus der Gruppe der Seltenerden, M aus dem Übergangselement Ni, Co oder Mn besteht und n ≥ 1 ist.

8. Anwendung nach Anspruch 6 oder 7, **dadurch gekennzeichnet, dass** das polaronische Schwarzoxid aus Pr₂NiO₄ besteht.

9. Anwendung nach Anspruch 6, 7 oder 8, **dadurch gekennzeichnet, dass** die Ausbildung der Beschichtung vor dem Pressen und der Versinterung durchgeführt wird, indem eine Schicht des polaronischen Schwarzoxids in pulverförmiger Gestalt auf mindestens einem Bereich der Oberfläche der feuerfesten Pulvermasse abgelagert wird, und indem die so ausgebildete doppelte Schicht dann dem Pressen und der Versinterung unterzogen wird.

10. Anwendung nach Anspruch 6, 7 oder 8, **dadurch gekennzeichnet, dass** die Ausbildung der Beschichtung nach dem Pressen und der Versinterung durch Auftragen des polaronischen Schwarzoxids auf die gesinterte Masse durchgeführt wird.

11. Anwendung nach Anspruch 10, **dadurch gekennzeichnet, dass** das Auftragen die Herstellung einer Suspension des polaronischen Schwarzoxids in einem Suspensionsmedium, deren Ablagerung auf der gesinterten Masse und ein Einbrennen bei einer Temperatur umfasst, die mindestens ausreicht, um das Suspensionsmedium zu eliminieren.

12. Anwendung nach Anspruch 10 oder 11, **dadurch gekennzeichnet, dass** das Auftragen oder die Ablagerung durch Zerstäubung durchgeführt wird.

13. Anwendung nach Anspruch 11 oder 12, **dadurch gekennzeichnet, dass** das Suspensionsmedium außerdem einen Haftzusatz für das polaronische Schwarzoxid auf der Oberfläche der gesinterten Masse enthält.

14. Wärmestrahler, ein Substrat aus feuerfestem Material umfassend, in welchem ein elektrischer Widerstand eingeschlossen ist, **dadurch gekennzeichnet, dass** das Substrat auf mindestens einem Bereich seiner Oberfläche mit einer Beschichtung versehen ist, welche eine Substanz umfasst, die in dem Spektralbereich, der von 0,5 bis 30 µm reicht, ein normales spektrales Emissionsvermögen aufweist, das höher als dasjenige des Substrats ist und der Einheit am nächsten liegt, wobei die Substanz aus den polaronischen Schwarzoxiden ausgewählt wird.

15. Strahler nach Anspruch 14, **dadurch gekennzeichnet, dass** die polaronischen Schwarzoxide sich dergestalt, wie in irgendeinem der Ansprüche 2 und 3 definiert, darstellen.

16. Strahler nach Anspruch 14 oder 15, bei dem die Enden des elektrischen Widerstands im Bereich von zwei Zonen des äußeren Randes des Substrats austreten, **dadurch gekennzeichnet, dass** die Beschichtung auf der gesamten Oberfläche des Substrats vorgesehen ist, mit Ausnahme dieser Zonen.

## Claims

1. A process for improving the radiative performance of a thermal radiation (IR) emitter having a refractory material basis with an electric resistor embedded therein, **characterized in that** it comprises the step of combining with said refractory material a substance having, in the spectral region ranging from 0,5 to 30 µm, a normal spectral emissivity higher than that of said refractory material and as close as possible to the unit, said substance being selected among the polaronic black oxides.

2. The process according to claim 1, **characterized in that** the polaronic black oxides are selected from the group consisting of the mixed oxides of general formula Lₙ₊₁ Mₙ O₃ₙ₊₁ or Lₙ₊₁ Mn O₂ₙ₊₂ where L is an element of the rare earth series, M is transition element Ni, Co or Mn and n ≥ 1.

3. The process according to claim 1 or 2, **characterized in that** the polaronic black oxide is Pr₂NiO₄.

4. The process according to claim 1, 2 or 3, **characterized in that** the step of combining said refractory material with the polaronic black oxide comprises mixing said material and said oxide.

5. The process according to claim 1, 2 or 3, **characterized in that** the step of combining said refractory material with the polaronic black oxide comprises coating said oxide on at least one portion of the emitter outer surface.

6. A use of the process according to claim 5 for manufacturing a thermal radiation (IR) emitter with high radiative performance, said manufacturing comprising pressing, and then sintering a mass of sinterable refractory powder with an electric resistor embedded therein, to obtain a sintered mass, and forming on at least one portion of the surface of said sintered mass a coating comprising a substance having, in the spectral region ranging from 0,5 to 30 µm, a normal spectral emissivity higher than that of the sintered mass and as close as possible to the unit, said substance being selected among the polaronic black oxides.

7. The use according to claim 6, **characterized in that** the polaronic black oxides are selected from the group consisting of the mixed oxides of general formula Lₙ₊₁ Mₙ O₃ₙ₊₁ or Lₙ₊₁ Mₙ O₂ₙ₊₂ where L is an element of the rare earth series, M is transition element Ni, Co or Mn and n ≥ 1.

8. The use according to claim 6 or 7, **characterized in that** the polaronic black oxide is Pr₂NiO₄.

9. The use according to claim 6, 7 or 8, **characterized in that** the formation of said coating is carried out before pressing and sintering, by depositing a coat of said polaronic black oxide in the form of a powder on at least one portion of the surface of the refractory powder mass, and then by submitting the thus formed double coat to pressing and sintering.

10. The use according to claim 6, 7 or 8, **characterized in that** the formation of said coating is carried out after pressing and sintering, by applying said polaronic black oxide onto the sintered mass.

11. The use according to claim 10, **characterized in that** said application comprises preparing a suspension of said polaronic black oxide in a suspension forming medium, depositing said suspension on the sintered mass and baking at least at a temperature sufficient to remove said suspension forming medium.

12. The use according to claim 10 or 11, **characterized in that** said application or said deposition is carried out by spraying.

13. The use according to claim 11 or 12, **characterized in that** the suspension further contains an additive for bonding said polaronic black oxide to the surface of the sintered mass.

14. A thermal radiation emitter comprising a substrate of refractory material with an electric resistor incorporated therein, **characterized in that** said substrate is provided on at least one portion of its surface with a coating comprising a substance having, in the spectral region ranging from 0,5 to 30 µm, a normal spectral emissivity higher than that of said substrate and as close as possible to the unit, said substance being selected among the polaronic black oxides.

15. The emitter according to claim 14, **characterized in that** said polaronic black oxides are as set forth in claim 2 or 3.

16. The emitter according to claim 14 or 15, wherein the ends of the electric resistor emerge at two regions of the external edge of the substrate, **characterized in that** said coating is provided on the entire surface of said substrate, except for said regions.
